# EUROPEAN PATENT APPLICATION

(11) **EP 4 438 431 A1**
(43) Date of publication of application: **02.10.2024**
(21) Application number: 23166098.6
(22) Date of filing: 31.03.2023
(51) Int. Cl.: B60W 60/00

(54) **PROXIMITY DETECTION**

(71) Applicant: Newtrax Technologies Inc., Montreal, Quebec H2Y 1P5 (CA)
(72) Inventor: CERVINKA, Alexandre, Montreal (Quebec) (CA); CORNEAU, Patrice, Montreal (Quebec) (CA); BOUCHARD, Martin, Montreal (Quebec) (CA)
(74) Representative: Sandvik

(57) **Abstract**

An apparatus, method and computer program product for: communicating with a first proximity detection sensor and a second proximity detection sensor, detecting presence of a collision detection device of a mobile object within a first proximity detection range based on first information received from the first proximity detection sensor, determining, in response to detecting the presence of the collision detection device, a vehicle speed parameter corresponding to a second proximity detection range, controlling a speed of the autonomous mining vehicle based on the vehicle speed parameter, and controlling, in response to detecting presence of the collision detection device within the second proximity detection range, the autonomous mining vehicle to perform at least one collision avoidance operation based on second information received from the second proximity detection sensor.

## Description

### TECHNICAL FIELD

The present application relates generally to proximity detection. More specifically, the present application relates to proximity detection for avoiding a collision between an autonomous mining vehicle and a mobile object.

### BACKGROUND

Mobile mining machines operate in varying circumstances. A mining environment is a challenging operating environment in terms of risks of collision due to limited space, limited light, and limited connectivity.

### SUMMARY

Various aspects are set out in the claims. The scope of protection sought for various embodiments of the invention is set out by the independent claims. The examples and features, if any, described in this specification that do not fall under the scope of the independent claims are to be interpreted as examples useful for understanding various embodiments of the invention.

According to a first aspect, there is provided an apparatus comprising means for performing: communicating with a first proximity detection sensor and a second proximity detection sensor, detecting presence of a collision detection device of a mobile object within a first proximity detection range based on first information received from the first proximity detection sensor, determining, in response to detecting the presence of the collision detection device, a vehicle speed parameter corresponding to a second proximity detection range, controlling a speed of the autonomous mining vehicle based on the vehicle speed parameter, and controlling, in response to detecting presence of the collision detection device within the second proximity detection range, the autonomous mining vehicle to perform at least one collision avoidance operation based on second information received from the second proximity detection sensor.

According to a second aspect, there is provided a method comprising: communicating with a first proximity detection sensor and a second proximity detection sensor, detecting presence of a collision detection device of a mobile object within a first proximity detection range based on first information received from the first proximity detection sensor, determining, in response to detecting the presence of the collision detection device, a vehicle speed parameter corresponding to a second proximity detection range, controlling a speed of the autonomous mining vehicle based on the vehicle speed parameter, and controlling, in response to detecting presence of the collision detection device within the second proximity detection range, the autonomous mining vehicle to perform at least one collision avoidance operation based on second information received from the second proximity detection sensor.

According to a third aspect, there is provided a computer program comprising instructions for causing an apparatus to perform at least the following: communicating with a first proximity detection sensor and a second proximity detection sensor, detecting presence of a collision detection device of a mobile object within a first proximity detection range based on first information received from the first proximity detection sensor, determining, in response to detecting the presence of the collision detection device, a vehicle speed parameter corresponding to a second proximity detection range, controlling a speed of the autonomous mining vehicle based on the vehicle speed parameter, and controlling, in response to detecting presence of the collision detection device within the second proximity detection range, the autonomous mining vehicle to perform at least one collision avoidance operation based on second information received from the second proximity detection sensor.

According to a fourth aspect, there is provided an apparatus comprising at least one processor and at least one memory including computer program code, the at least one memory and the computer program code configured to, with the at least one processor, cause the apparatus at least to: communicate with a first proximity detection sensor and a second proximity detection sensor, detect presence of a collision detection device of a mobile object within a first proximity detection range based on first information received from the first proximity detection sensor, determine, in response to detecting the presence of the collision detection device, a vehicle speed parameter corresponding to a second proximity detection range, control a speed of the autonomous mining vehicle based on the vehicle speed parameter, and control, in response to detecting presence of the collision detection device within the second proximity detection range, the autonomous mining vehicle to perform at least one collision avoidance operation based on second information received from the second proximity detection sensor.

According to a fifth aspect, there is provided a non-transitory computer readable medium comprising program instructions for causing an apparatus to perform at least the following: communicating with a first proximity detection sensor and a second proximity detection sensor, detecting presence of a collision detection device of a mobile object within a first proximity detection range based on first information received from the first proximity detection sensor, determining, in response to detecting the presence of the collision detection device, a vehicle speed parameter corresponding to a second proximity detection range, controlling a speed of the autonomous mining vehicle based on the vehicle speed parameter, and controlling, in response to detecting presence of the collision detection device within the second proximity detection range, the autonomous mining vehicle to perform at least one collision avoidance operation based on second information received from the second proximity detection sensor.

According to a sixth aspect, there is provided a computer readable medium comprising program instructions for causing an apparatus to perform at least the following: communicating with a first proximity detection sensor and a second proximity detection sensor, detecting presence of a collision detection device of a mobile object within a first proximity detection range based on first information received from the first proximity detection sensor, determining, in response to detecting the presence of the collision detection device, a vehicle speed parameter corresponding to a second proximity detection range, controlling a speed of the autonomous mining vehicle based on the vehicle speed parameter, and controlling, in response to detecting presence of the collision detection device within the second proximity detection range, the autonomous mining vehicle to perform at least one collision avoidance operation based on second information received from the second proximity detection sensor.

### BRIEF DESCRIPTION OF THE DRAWINGS

Some example embodiments will now be described with reference to the accompanying drawings:
Figure 1 shows a block diagram of an example apparatus in which examples of the disclosed embodiments may be applied;
Figure 2 shows a block diagram of another example apparatus in which examples of the disclosed embodiments may be applied;
Figure 3 illustrates an example of an autonomous mining vehicle operating in a mine; and
Figure 4 shows an example method incorporating aspects of examples of the disclosed embodiments.

### DETAILED DESCRIPTION

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

Example embodiments relate to controlling an autonomous mining vehicle. More particularly, example embodiments relate to controlling a speed of an autonomous mining vehicle in response to detecting the presence of a collision detection device of a mobile object.

Proximity detection in an underground mine is challenging due to the challenging operating environment. Proximity detection for an autonomous mining vehicle may be carried out using different types of proximity detection sensors each having their own operating envelopes such as different detection ranges.

Different kinds of proximity detection sensors are needed when operating in an underground mine since, for example, some sensors are able to detect presence of an object at a long range but are not able to determine a distance and/or direction to the object, while some sensors are able detect a distance and/or direction to an object, but the detection range is not sufficient for safe operation with high vehicle speeds such as speed of 30 km/h in a mine.

An example embodiment relates to a proximity detection apparatus for an autonomous mining vehicle associated with at least a first proximity detection sensor having a first proximity detection range and a second proximity detection sensor having a second proximity detection range, the apparatus being configured to communicate with the first proximity detection sensor and the second proximity detection sensor, detect presence of a collision detection device of a mobile object within the first proximity detection range based on first information received from the first proximity detection sensor, determine, in response to detecting the presence of the collision detection device, a vehicle speed parameter corresponding to the second proximity detection range, control a speed of the autonomous mining vehicle based on the vehicle speed parameter, and control, in response to detecting presence of the collision detection device within the second proximity detection range, the autonomous mining vehicle to perform at least one collision avoidance operation based on second information received from the second proximity detection sensor.

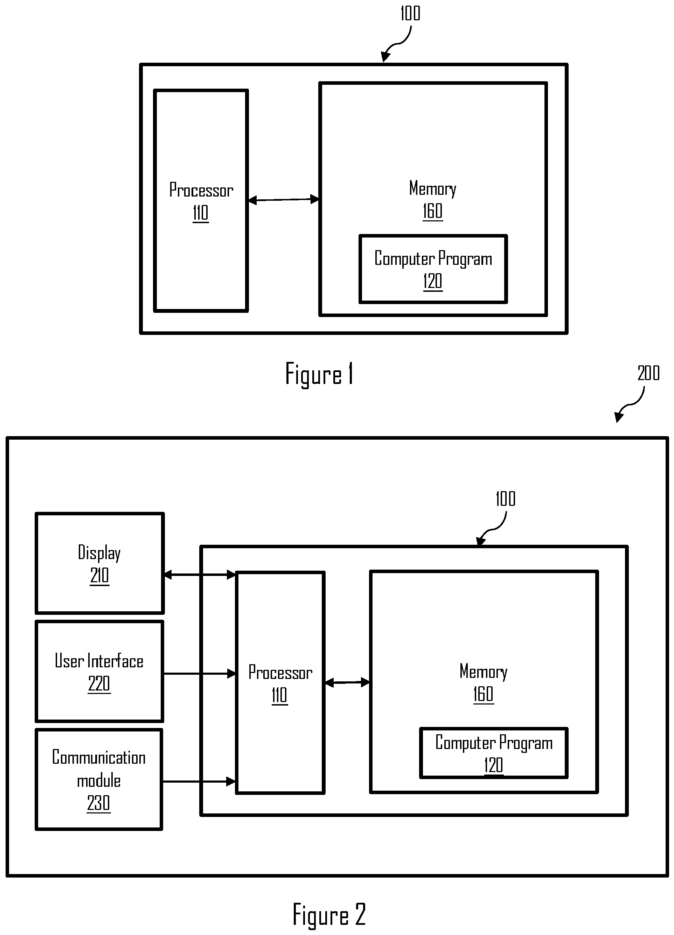

Figure 1 is a block diagram depicting an apparatus 100 operating in accordance with an example embodiment of the invention. The apparatus 100 may be, for example, an electronic device such as a module comprised by an automation or control system, a chip or a chipset. The apparatus 100 comprises one or more control circuitry, such as at least one processor 110 and at least one memory 160, including one or more algorithms such as computer program instructions 120 wherein the at least one memory 160 and the computer program instructions are configured, with the at least one processor 110 to cause the apparatus to carry out any of example functionalities described below.

In the example of Figure 1, the processor 110 is a control unit operatively connected to read from and write to the memory 160. The processor 110 may also be configured to receive control signals received via an input interface and/or the processor 110 may be configured to output control signals via an output interface. In an example embodiment the processor 110 may be configured to convert the received control signals into appropriate commands for controlling functionalities of the apparatus.

The at least one memory 160 stores computer program instructions 120 which when loaded into the processor 110 control the operation of the apparatus 100 as explained below. In other examples, the apparatus 100 may comprise more than one memory 160 or different kinds of storage devices.

Computer program instructions 120 for enabling implementations of example embodiments of the invention or a part of such computer program instructions may be loaded onto the apparatus 100 by the manufacturer of the apparatus 100, by a user of the apparatus 100, or by the apparatus 100 itself based on a download program, or the instructions can be pushed to the apparatus 100 by an external device. The computer program instructions may arrive at the apparatus 100 via an electromagnetic carrier signal or be copied from a physical entity such as a computer program product, a memory device or a record medium such as a USB stick, a Compact Disc (CD), a Compact Disc Read-Only Memory (CD-ROM), a Digital Versatile Disk (DVD) or a Blu-ray disk.

Figure 2 is a block diagram depicting an apparatus 200 in accordance with an example embodiment of the invention. The apparatus 200 may be an electronic device such as a proximity or collision detection device, comprising a Personal Computer (PC), a laptop, a desktop, a wireless terminal, a communication terminal, a control apparatus, a computing device, a portable computing device, collision detection sensors, or the like. In the examples below it is assumed that the apparatus 200 is a computing device such as a proximity detection apparatus.

In the example embodiment of Figure 2, the apparatus 200 is illustrated as comprising the apparatus 100, a display 210, a user interface 220 for interacting with the computing device 200 and a communication module 230.

The display 210 may also be configured to act as a user interface. For example, the display may be a touch screen display. In an example embodiment, the display 210 and/or the user interface 220 may be external to the apparatus 200, but in communication with it.

Additionally, or alternatively, the user interface may also comprise a manually operable control such as a button, a key, a touch pad, a joystick, a stylus, a pen, a roller, a rocker, a keypad, a keyboard, or any suitable input mechanism for inputting and/or accessing information.

The communication module 230 may be configured to establish radio communication with another device using, for example, a cellular network, a Bluetooth connection, a Wi-Fi connection, an ultra-wide band (UWB) connection, a chirp-spread-spectrum (CSS) connection, and/or the like.

The communication module 230 may further be configured to process received information. For example, the communication module 230 may be configured to receive information from one or more collision detection sensors and/or determine a distance between the apparatus 200 and an object of interest based on the information received from the one or more collision detection sensors. The communication module 230 may comprise a single communication unit or a plurality of communication units for communicating with an object of interest.

According to an example embodiment, the apparatus 200 comprises a proximity detection apparatus. The apparatus 200 may be associated with an object of interest such as a mobile mining vehicle, a cap lamp of a miner, a fixed location such as a void in the ground or other object of interest.

According to an example embodiment, a mobile mining vehicle comprises a rock drilling rig, a loader, a dumper, a load haul dump (LHD) vehicle, a ground support rig, an underground transport vehicle, a light duty vehicle, or any other vehicle or machine capable of operating in an underground mine.

A mobile mining vehicle may comprise, for example, an autonomous mining vehicle. An autonomous mining vehicle comprises a mining vehicle that is configured to perform at least one task independently, without external control. For example, an autonomous mining vehicle may be configured to load and/or transport excavated material, such as ore, rocks, or sand from one place to another. However, it should be noted that an autonomous mining vehicle may be taken under external control, for example, in particular operation areas or operation conditions such as in case of an emergency.

An autonomously operating mining vehicle is configured to monitor the environment it is operating in using at least one proximity detection sensor associated with the autonomous mining vehicle. The at least one proximity detection sensor is configured to detect an object without physical contact with the object using, for example, one or more wireless communication technologies.

A proximity detection sensor associated with the autonomous mining vehicle may comprise a sensor that is mounted on the autonomous mining vehicle and operatively connected to the apparatus 200.

According to an example embodiment, the autonomous mining vehicle is associated with at least a first proximity detection sensor and a second proximity detection sensor. The first proximity detection sensor may be configured to monitor the environment of the autonomous mining vehicle using a first radio frequency (RF) technology and the second proximity detection sensor may be configured to monitor the environment of the autonomous mining vehicle using a second RF technology. The first RF technology may be different from the second RF technology. Alternatively, the first proximity detection sensor and/or the second proximity detection sensor may be configured to monitor the environment of the autonomous mining vehicle using a plurality of RF technologies.

Different types of proximity detection sensors have different capabilities. Different capabilities may comprise, for example, different radio protocols, different operating frequencies, different detection ranges for detecting remote objects, or the like.

According to an example embodiment, the first proximity detection sensor has a first proximity detection range, and the second proximity detection sensor has a second proximity detection range. The first proximity detection range may be different from the second proximity detection range.

A proximity detection range may comprise a maximum detection distance for detecting a remote object.

According to an example embodiment, the first proximity detection sensor comprises a received signal strength indicator (RSSI) sensor.

An RSSI sensor indicates an estimated measure of power level received by the apparatus 200. A high RSSI indicates that a remote object is close to the proximity detection sensor and a low RSSI indicates that the remote object is further away from the proximity detection sensor. A low RSSI may also be due to obstacles between the remote object and the proximity detection sensor.

An RSSI sensor may be capable of detecting a presence of a remote object based on detected signal strength for distances over, for example, 100 meters in a mine environment, but it might not be able to determine a distance between the RSSI sensor and the remote object and/or in which direction the remote object is located with respect to the sensor.

According to an example embodiment, the second proximity detection sensor comprises an ultra-wideband (UWB) transceiver. According to another example embodiment, the second proximity detection sensor comprises a chirp-spread-spectrum (CSS) transceiver.

A UWB and CSS transceiver may be configured to detect a presence of a remote objectbased on measured time-of-flight (ToF) between the transceiver and a remote object. A UWB sensor may be capable of detecting presence of a remote object in a mine environment within a distance of 1 to 50 meters such as within 10, 20 or 35 meters. A CSS transceiver may be capable of detecting presence of a remote object in a mine environment within a distance of 1 to 100 meters such as 20, 50 or 80 meters.

According to an example embodiment, the apparatus 200 is configured to communicate with one or more devices. For example, the apparatus 200 may be configured to communicate with a cloud server, a local server, an edge computing server, a mobile computing device, and/or different kinds of machinery, mobile objects such as mobile mining vehicles or miners carrying a proximity detection device, or the like.

Communicating with a device may comprise, for example, receiving and/or transmitting information using a wireless or wired connection. According to an example embodiment, the apparatus 200 is configured to receive information from a plurality of proximity detection sensors. According to another example embodiment, the apparatus 200 is configured to communicate with one or more collision detection devices associated with an object of interest. The apparatus 200 may be configured to communicate with at least one sensor and/or collision device associated with an object using, for example, the communication module 230.

According to an example embodiment, the apparatus 200 is configured to communicate with the first proximity detection sensor and the second proximity detection sensor.

Communicating with the first proximity detection sensor may comprise, for example, receiving and/or transmitting information using a wireless or wired connection. Communication with the second proximity detection sensor may comprise, for example, receiving and/or transmitting information using a wireless or wired connection.

According to an example embodiment, the apparatus 200 is configured to receive first information from the first proximity detection sensor. The first information may comprise, for example, an RF broadcast message emitted by a collision detection device included in a mobile object such as a mobile mining vehicle in an underground mine, or a collision detection device included in a cap lamp of a miner.

Without limiting the scope of the claims, an advantage of receiving a radio frequency message from a collision detection device is that the apparatus 200 is aware of presence of the collision detection device.

The first information may further comprise information on a detected remote object such as information on a vehicle in a mine where the autonomous mining vehicle is operating. The first information may comprise, for example, measurement data or measurement data processed by the first proximity detection sensor.

According to an example embodiment, the apparatus 200 is configured to detect presence of a collision detection device of a mobile object within the first proximity detection range based on first information received from the first proximity detection device.

Detecting presence of a collision detection device may comprise detecting presence of an RF signal transmitted by the collision detection device. Additionally, or alternatively, detecting presence of a collision detection device may comprise determining a strength of an RF signal transmitted by the collision detection device.

According to an example embodiment, the first information comprises information on a received signal strength indicator (RSSI). An RSSI corresponds to a measure of power level the apparatus 200 receives from the collision detection device of a mobile object.

According to an example embodiment, the apparatus 200 is configured to initiate communication with the collision detection device upon detecting the presence of the collision detection device within the first proximity detection range.

Initiating communication with a collision detection device may comprise, for example, sending one or more messages to the collision detection device for initiating ranging.

Ranging comprises a process for measuring a distance between two nodes such as a distance between the apparatus 200 and a collision detection device. The apparatus 200 may be configured to determine the distance between the apparatus 200 and a collision detection device by performing ranging based on RF Time of Flight (ToF) such as two-way ranging (TWR), for example.

Ranging comprises exchanging messages between nodes such as the apparatus 200 and a collision detection device and measuring parameters to estimate a range. Ranging messages may comprise different types of messages such as a ranging request, a ranging response, and/or a ranging result.

According to an example embodiment, the apparatus 200 is configured to receive second information from the second proximity detection sensor.

Similarly to the first information, the second information may comprise information on a detected remote object such as a vehicle in a mine where the autonomous mining vehicle is operating. The second information may comprise, for example, measurement data or measurement data processed by the second proximity detection sensor.

According to an example embodiment, the second information comprises information on a time-of-flight measurement between the second proximity detection sensor and the collision detection device.

Information on a time-of-flight measurement between the second proximity detection sensor and the collision detection device may comprise, for example, an RF time-of-flight of a message travelling from the second proximity sensor to the collision detection device associated with an object of interest.

According to an example embodiment, the apparatus 200 is configured to perform ranging using the second information.

As explained above, ranging comprises a process for measuring a distance between two nodes such as a distance between the apparatus 200 and the collision detection device of the object.

According to an example embodiment, the apparatus 200 is configured to determine a distance between the second proximity detection sensor and the collision detection device based on the second information.

According to an example embodiment, the apparatus 200 is configured to determine, in response to detecting the presence of the collision detection device, a vehicle speed parameter corresponding to the second proximity detection range.

A vehicle speed parameter corresponding to a proximity detection range of a proximity detection sensor comprises a parameter indicative of a speed of a vehicle that enables the proximity detection sensor to trigger a control of the vehicle such that there is enough time for a predefined slowdown or stop control of the vehicle. A predefined slowdown of a vehicle may comprise a rate of slowing down the vehicle that is considered safe in a mine.

For example, a vehicle speed parameter corresponding to the second proximity detection range comprises a parameter indicative of a speed of the autonomous mining vehicle that enables the second proximity detection sensor to trigger a control of the vehicle such that there is enough time for a controlled slowdown or stop control of the autonomous mining vehicle.

According to an example embodiment, the vehicle speed parameter comprises a maximum speed allowed for the autonomous mining vehicle.

The maximum speed allowed for the autonomous mining vehicle may comprise, for example, 5-20 km/h such as 7, 10 or 15 km/h.

Determining a vehicle speed parameter corresponding to the second proximity detection range may comprise, for example, selecting a vehicle speed parameter or calculating a vehicle speed parameter.

Selecting a vehicle speed parameter may comprise, for example, selecting the vehicle speed parameter based on a look-up table, selecting a predefined vehicle speed parameter, selecting a previously used vehicle speed parameter, or the like.

Calculating a vehicle speed parameter may comprise, for example, calculating the vehicle speed parameter based on a current speed of the autonomous mining vehicle, a speed of the collision detection device approaching the autonomous mining vehicle, proximity detection range of the proximity sensor of the autonomous mining vehicle, information on the environment of the autonomous mining vehicle and/or the like.

For example, assuming a first autonomous mining vehicle and a mobile object, such as a second autonomous mining vehicle, in a long straight tunnel are traveling towards each other at 25 km/h, the rate at which the first autonomous mining vehicle and the second autonomous mining vehicle come closer to each other is 50 km/h that is approximately 14 m/s. Assuming the proximity detection range of a proximity detection sensor in the first autonomous mining vehicle is 100 meters, the time period for controlling the first autonomous mining vehicle after the mobile object was detected is about 7 seconds before a collision between the first autonomous mining vehicle and the mobile object. On the other hand, assuming the proximity detection rage of the proximity detection sensor is 35 meters, the time period for controlling the first autonomous mining vehicle after the mobile object was detected is about 2,5 seconds before a collision between the first autonomous mining vehicle and the mobile object.

Therefore, the apparatus 200 may be configured to calculate the vehicle speed parameter based on the proximity detection range of the second proximity detection sensor, a current speed of the autonomous mining vehicle and a speed of the collision detection device approaching the autonomous mining vehicle.

Without limiting the scope of the claims, an advantage of determining a vehicle speed parameter corresponding to the second proximity detection range is that the capabilities of the second proximity detection sensor may be taken into account upon switching from using the first proximity detection sensor to using the second proximity detection sensor, thereby enabling continuing operation of the autonomous mining vehicle in a safe manner.

According to an example embodiment, the apparatus 200 is configured to control a speed of the autonomous mining vehicle based on the vehicle speed parameter.

The apparatus 200 may be configured to control the speed of the autonomous mining vehicle until at least one criterion is fulfilled. The at least criterion may relate to, for example, the presence of the mobile object within the first proximity detection range or communication between the autonomous mining vehicle and the mobile object. For example, the apparatus 200 may be configured to control the speed of the autonomous mining vehicle as long as the presence of the collision detection device of a mobile object within the first proximity detection range is detected or until the speed of the autonomous mining vehicle is controlled based on communication between the autonomous mining vehicle and the mobile object.

Controlling a speed of the autonomous mining vehicle may comprise, for example, reducing the speed of the autonomous mining vehicle or increasing the speed of the autonomous mining vehicle.

According to an example embodiment, controlling the speed of the autonomous mining vehicle comprises reducing the speed of the autonomous mining vehicle.

Reducing the speed of the autonomous mining vehicle may comprise, for example, reducing the speed based on the vehicle speed parameter or deriving the speed of the autonomous mining vehicle from the vehicle speed parameter.

According to an example embodiment, controlling the speed of the autonomous mining vehicle comprises defining an allowed maximum speed for the autonomous mining vehicle and limiting the speed of the autonomous mining vehicle to the defined maximum speed.

According to an example embodiment, the apparatus 200 is configured to control, in response to detecting presence of the collision detection device within the second proximity detection range, the autonomous mining vehicle to perform at least one collision avoidance operation based on second information received from the second proximity detection device.

A collision avoidance operation may comprise an operation that enables avoiding a collision between the autonomous mining vehicle and the mobile object. A collision avoidance operation may comprise a proactive operation or a reactive operation. A proactive operation may comprise an operation that aims to prevent a dangerous situation from occurring and a reactive operation may comprise an operation for reacting in a dangerous situation.

A proactive operation may comprise, for example, communicating with the mobile object and a reactive operation may comprise, for example, controlling movement of the autonomous mining vehicle.

According to an example embodiment, the at least one collision avoidance operation comprises slowing down or stopping the autonomous mining vehicle.

Without limiting the scope of the claims, an advantage of slowing down or stopping the autonomous mining vehicle is that a risk of a collision between the autonomous mining vehicle and the mobile object may be reduced.

According to an example embodiment, the at least one collision avoidance operation comprises transmitting a message to the mobile object.

Without limiting the scope of the claims, an advantage of transmitting a message to the mobile object is that the mobile object becomes aware of the autonomous mining vehicle, thereby enabling reducing a risk of collision.

As explained above, the apparatus 200 may be configured to communicate with one or more collision detection devices associated with an object of interest.

According to an example embodiment, the apparatus 200 is configured to communicate with the collision detection device of the mobile object. For example, the apparatus 200 maybe configured to receive information from and /or transmit information to the collision detection device of the mobile object. Transmitting information may comprise, for example, transmitting information on the autonomous mining vehicle and/or transmitting one or more instructions to the collision detection device of the mobile object. The one or more instructions may comprise, for example, controlling operation of the mobile object.

According to an example embodiment, the at least one collision avoidance operation comprises instructing the mobile object to slow down.

Without limiting the scope of the claims, an advantage of instructing the mobile object to slow down is that the interaction with the autonomous mining vehicle and the mobile object enables more flexible and safe operation in the mine environment.

According to an example embodiment, the apparatus 200 comprises means for performing features of the apparatus 200, wherein the means for performing comprises at least one processor 110, at least one memory 160 including computer code 120 configured to, with the at least one processor 110, cause the performance of the apparatus 200.

According to an example embodiment, the apparatus 200 comprises means for communicating with the first proximity detection sensor and the second proximity detection sensor, means for detecting presence of a collision detection device of a mobile object within the first proximity detection range based on first information received from the first proximity detection sensor, means for determining, in response to detecting the presence of the collision detection device, a vehicle speed parameter corresponding to the second proximity detection range, means for controlling a speed of the autonomous mining vehicle based on the vehicle speed parameter, and means for controlling, in response to detecting presence of the collision detection device within the second proximity detection range, the autonomous mining vehicle to perform at least one collision avoidance operation based on second information received from the second proximity detection sensor.

According to an example embodiment, the apparatus 200 further comprises means for determining a distance between the second proximity detection sensor and the collision detection device based on the second information, means for initiating communication with the collision detection device upon detecting the presence of the collision detection device within the first proximity detection range and/or means for performing ranging using the second information.

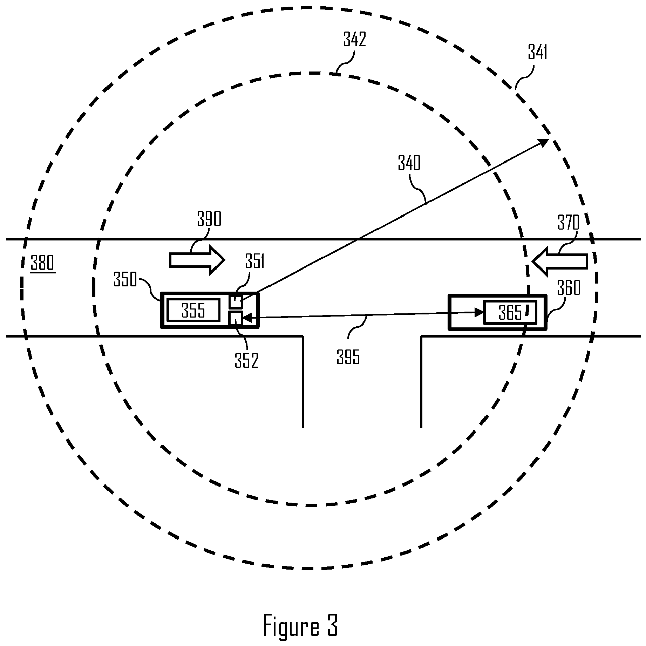

Figure 3 illustrates an example of an autonomous mining vehicle operating in a mine. The autonomous mining vehicle 350 may comprise, for example, a rock drilling rig, a loader, a dumper, a load haul dump (LHD) vehicle, a ground support rig, or an underground transport vehicle. The autonomous mining vehicle 350 is travelling in the mine 380 in a direction indicated by arrow 390.

The autonomous mining vehicle 350 comprises a proximity detection apparatus 355. In the example of Figure 3, the proximity detection apparatus 355 comprises the apparatus 200.

The proximity detection apparatus 355 is configured to communicate with a first proximity detection sensor 351 and a second proximity detection sensor 352. The first proximity detection sensor 351 and the second proximity detection sensor 352 are associated with the autonomous mining vehicle 350. The first proximity detection sensor 351 has a first proximity detection range 341 indicated by the arrow 340 and the second proximity detection sensor 352 has a second proximity detection range 342.

In the example of Figure 3, the first proximity detection range 341 and the second proximity detection range 342 are different from each other, and the second proximity detection range 342 is shorter than the first proximity detection range 341. Further, in the example of Figure 3, the first proximity detection sensor 351 is capable of providing information on a presence of collision detection device of a mobile object, but the information does not enable determining a distance between the first proximity detection sensor and the collision detection device of the mobile object. The second proximity detection sensor 352, on the other hand, is capable of providing information enabling determining a distance between the second proximity detection sensor and the collision detection device of the mobile object, but as explained above, the second proximity detection range 342 is shorter than the first proximity detection range 341.

An object of interest is also operating in the mine 380. In the example of Figure 3, the object of interest is a mobile object 360 associated with a collision detection device 365. The mobile object 360 is travelling in the mine 380 in a direction indicated by arrow 370. In other words, the autonomous mining vehicle 350 and the mobile object 360 are approaching each other.

In the example of Figure 3, the proximity detection apparatus 355 detects presence of the collision detection device 365 of the mobile object 360 within the first proximity detection range 341 based on first information received from the first proximity detection sensor 351.

The first information may comprise, for example, an RF broadcast message emitted by the collision detection device 365 associated with the mobile object 360.

In response to detecting the presence of the collision detection device, the proximity detection apparatus 355 determines a vehicle speed parameter corresponding to the second proximity detection range 342. In the example of Figure 3, the vehicle speed parameter comprises a maximum speed allowed for the autonomous mining vehicle 350 in the mine 380.

The proximity detection apparatus 355 then controls a speed of the autonomous mining vehicle based on the vehicle speed parameter. The proximity detection apparatus 355 further initiates communication 395 with the mobile object 360. Initiating communication may comprise, for example, sending one or more messages to the collision detection device 365 for initiating ranging.

In the example of Figure 3, the mobile object 360 moves towards the autonomous mining vehicle and the proximity detection apparatus 355 detects presence of the collision detection device 365 of the mobile object 360 within the second proximity detection range 342 based on second information received from the second proximity detection sensor 352.

The second information may comprise, for example, information on a time-of-flight measurement between the second proximity detection sensor 352 and the collision detection device 365.

In the example of Figure 3, the proximity detection apparatus 355 controls the autonomous mining vehicle 350 to perform at least one collision avoidance operation based on second information received from the second proximity detection sensor 352.

The at least one collision avoidance operation may comprise, for example, slowing down or stopping the autonomous mining vehicle, or transmitting a message to the mobile object.

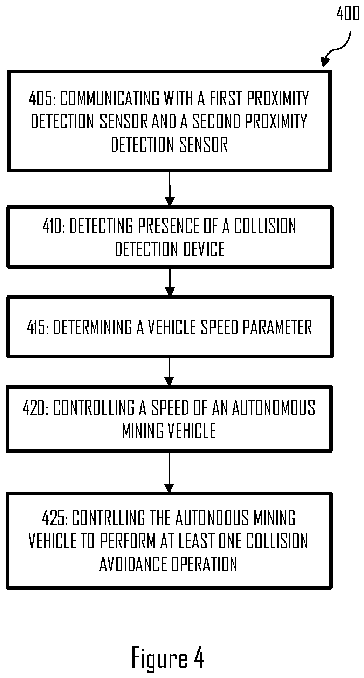

Figure 4 illustrates an example method 400 incorporating aspects of the previously disclosed embodiments. More specifically, the example method 400 illustrates controlling an autonomous mining vehicle associated with at least a first proximity detection sensor having a first proximity detection range and a second proximity detection sensor having a second proximity detection range. The method may comprise a computer-implemented method performed by the apparatus 200.

The method starts with communicating 405 with the first proximity detection sensor and the second proximity detection sensor.

As explained above, communicating with the first proximity detection sensor and the second proximity detection sensor may comprise, for example, receiving and/or transmitting information using a wireless or wired connection.

The method continues with detecting 410 a presence of a collision detection device of a mobile object within the first proximity detection range based on first information received from the first proximity detection sensor.

As explained above, detecting presence of a collision detection device may comprise detecting presence of an RF signal transmitted by the collision detection device. Additionally, or alternatively, detecting presence of a collision detection device may comprise determining a strength of an RF signal transmitted by the collision detection device.

The first information may comprise, for example, an RF broadcast message emitted by a collision detection device included in a mobile object such as a mobile mining vehicle in an underground mine, or a collision detection device included in a cap lamp of a miner. In the example of Figure 4, the first information comprises information on a received signal strength indicator (RSSI).

The method continues with determining 415, in response to detecting the presence of the collision detection device, a vehicle speed parameter corresponding to the second proximity detection range.

As explained above, determining a vehicle speed parameter corresponding to the second proximity detection range may comprise, for example, selecting a vehicle speed parameter or calculating a vehicle speed parameter.

Selecting a vehicle speed parameter may comprise, for example, selecting the vehicle speed parameter based on a look-up table, selecting a predefined vehicle speed parameter, selecting a previously used vehicle speed parameter, or the like. Calculating a vehicle speed parameter may comprise, for example, calculating the vehicle speed parameter based on a current speed of the autonomous mining vehicle, a speed of the collision detection device approaching the autonomous mining vehicle, information on the environment of the autonomous mining vehicle and/or the like.

In the example of Figure 4, the vehicle speed parameter comprises a maximum speed allowed for the autonomous mining vehicle.

The method further continues with controlling 420 a speed of the autonomous mining vehicle based on the vehicle speed parameter. Controlling a speed of the autonomous mining vehicle may comprise, for example, reducing the speed of the autonomous mining vehicle or increasing the speed of the autonomous mining vehicle.

In the example of Figure 4, controlling the speed of the autonomous mining vehicle comprises reducing the speed of the autonomous mining vehicle. As explained above, reducing the speed of the autonomous mining vehicle may comprise, for example, reducing the speed based on the vehicle speed parameter or deriving the speed of the autonomous mining vehicle from the vehicle speed parameter.

The method further continues with controlling 425, in response to detecting presence of the collision detection device within the second proximity detection range, the autonomous mining vehicle to perform at least one collision avoidance operation based on second information received from the second proximity detection sensor.

The second information may comprise, for example, information on a time-of-flight measurement between the second proximity detection sensor and the collision detection device.

A collision avoidance operation may comprise an operation that enables avoiding a collision between the autonomous mining vehicle and the mobile object. A collision avoidance operation may comprise a proactive operation or a reactive operation. A proactive operation may comprise an operation that aim to prevent a dangerous situation from occurring and a reactive operation may comprise an operation for reacting in a dangerous situation.

A proactive operation may comprise, for example, communicating with the mobile object and a reactive operation may comprise, for example, controlling movement of the autonomous mining vehicle.

In the example of Figure 4, the at least one collision avoidance operation comprises slowing down the autonomous mining vehicle, stopping the autonomous mining vehicle and/or transmitting a message to the mobile object.

Without limiting the scope of the claims, an advantage of determining, in response to detecting the presence of the collision detection device within the first proximity detection range, a vehicle speed parameter corresponding to the second proximity detection range and controlling the autonomous mining vehicle based on the vehicle speed parameter is that the autonomous mining vehicle may drive at a higher speed when there are no mobile objects within the first proximity detection range and, on the other hand, has a sufficient amount of time for enabling a controlled slow-down or stop based on information from a second proximity sensor when there is at least one mobile object within the first proximity detection range.

Another advantage is that different kinds of proximity detection sensors having different kinds of capabilities may be used for detecting mobile objects thereby enabling flexible control of the autonomous mining vehicle.

Without in any way limiting the scope, interpretation, or application of the claims appearing below, a technical effect of one or more of the example embodiments disclosed herein is that efficiency of the autonomous mining vehicle may be improved while maintaining safety.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Embodiments of the present invention may be implemented in software, hardware, application logic or a combination of software, hardware and application logic. The software, application logic and/or hardware may reside on the apparatus, a separate device or a plurality of devices. If desired, part of the software, application logic and/or hardware may reside on the apparatus, part of the software, application logic and/or hardware may reside on a separate device, and part of the software, application logic and/or hardware may reside on a plurality of devices. In an example embodiment, the application logic, software or an instruction set is maintained on any one of various conventional computer-readable media. In the context of this document, a 'computer-readable medium' may be any media or means that can contain, store, communicate, propagate or transport the instructions for use by or in connection with an instruction execution system, apparatus, or device, such as a computer, with one example of a computer described and depicted in Figure 2. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the above-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It will be obvious to a person skilled in the art that, as the technology advances, the inventive concept can be implemented in various ways. The invention and its embodiments are not limited to the examples described above but may vary within the scope of the claims.

## Claims

1. A proximity detection apparatus for an autonomous mining vehicle associated with at least a first proximity detection sensor having a first proximity detection range and a second proximity detection sensor having a second proximity detection range, the apparatus comprising at least one processor and at least one memory including computer program code, the at least one memory and the computer program code configured to, with the at least one processor, cause the apparatus at least to:
communicate with the first proximity detection sensor and the second proximity detection sensor;
detect presence of a collision detection device of a mobile object within the first proximity detection range based on first information received from the first proximity detection sensor;
determine, in response to detecting the presence of the collision detection device, a vehicle speed parameter corresponding to the second proximity detection range;
control a speed of the autonomous mining vehicle based on the vehicle speed parameter; and
control, in response to detecting presence of the collision detection device within the second proximity detection range, the autonomous mining vehicle to perform at least one collision avoidance operation based on second information received from the second proximity detection sensor.

2. The apparatus according to claim 1, wherein the first information comprises information on a received signal strength indicator and the second information comprises information on a time-of-flight measurement between the second proximity detection sensor and the collision detection device.

3. The apparatus according to claim 1 or 2, wherein controlling the speed of the autonomous mining vehicle comprises reducing the speed of the autonomous mining vehicle.

4. The apparatus according to any one of claims 1-3, wherein the at least one memory and the computer program code are further configured to, with the at least one processor, cause the apparatus to determine a distance between the second proximity detection sensor and the collision detection device based on the second information.

5. The apparatus according to any one of claims 1-4, wherein the at least one memory and the computer program code are further configured to, with the at least one processor, cause the apparatus to initiate communication with the collision detection device upon detecting the presence of the collision detection device within the first proximity detection range.

6. The apparatus according to any one of claims 1-5, wherein the vehicle speed parameter comprises a maximum speed allowed for the autonomous mining vehicle.

7. The apparatus according to any one of claims 1-6, wherein the at least one collision avoidance operation comprises slowing down or stopping the autonomous mining vehicle.

8. The apparatus according to any one of claims 1-7, wherein the at least one collision avoidance operation comprises transmitting a message to the mobile object.

9. The apparatus according to any one of claims 1-8, wherein the at least one collision avoidance operation comprises instructing the mobile object to slow down.

10. The apparatus according to any one of claims 1-9, wherein the first proximity detection sensor comprises a received signal strength indicator transceiver.

11. The apparatus according to any one of claims 1-10, wherein the second proximity detection sensor comprises an ultra-wideband transceiver or a chirp-spread-spectrum transceiver.

12. The apparatus according to any one of claims 1-11, wherein the at least one memory and the computer program code are further configured to cause the apparatus to perform ranging using the second information.

13. The apparatus according to any one of claims 1-12, wherein the autonomous mobile mining vehicle comprises a rock drilling rig, a loader, a dumper, a load haul dump (LHD) vehicle, a ground support rig, an underground transport vehicle, or a light duty vehicle.

14. A method for controlling an autonomous mining vehicle associated with at least a first proximity detection sensor having a first proximity detection range and a second proximity detection sensor having a second proximity detection range, the method comprising:
communicating with the first proximity detection sensor and the second proximity detection sensor;
detecting presence of a collision detection device of a mobile object within the first proximity detection range based on first information received from the first proximity detection sensor;
determining, in response to detecting the presence of the collision detection device, a vehicle speed parameter corresponding to the second proximity detection range;
controlling a speed of the autonomous mining vehicle based on the vehicle speed parameter; and
controlling, in response to detecting presence of the collision detection device within the second proximity detection range, the autonomous mining vehicle to perform at least one collision avoidance operation based on second information received from the second proximity detection sensor.

15. A computer program for controlling an autonomous mining vehicle associated with at least a first proximity detection sensor having a first proximity detection range and a second proximity detection sensor having a second proximity detection range, the computer program comprising instructions for causing an apparatus to perform at least the following:
communicating with the first proximity detection sensor and the second proximity detection sensor;
detecting presence of a collision detection device of a mobile object within the first proximity detection range based on first information received from the first proximity detection sensor;
determining, in response to detecting the presence of the collision detection device, a vehicle speed parameter corresponding to the second proximity detection range;
controlling a speed of the autonomous mining vehicle based on the vehicle speed parameter; and
controlling, in response to detecting presence of the collision detection device within the second proximity detection range, the autonomous mining vehicle to perform at least one collision avoidance operation based on second information received from the second proximity detection sensor.
